# EUROPÄISCHE PATENTSCHRIFT

(11) **EP 2 066 536 B1**
(45) Veröffentlichungstag und Bekanntmachung des Hinweises auf die Patenterteilung: **16.11.2011**
(21) Anmeldenummer: 07786563.2
(22) Anmeldetag: 04.08.2007
(51) Int. Cl.: B60R 25/08, B60T 7/20, B60T 8/17, B60T 8/32, B60T 13/00, B60T 17/16, B62D 63/08

(54) **WEGFAHRSCHULTZ FÜR ANHÄNGEFAHRZEUGE**
ANTI-THEFT PROTECTION FOR TRAILERS
PROTECTION POUR EMPÊCHER L'ENLÈVEMENT DE VÉHICULES EN REMORQUE

(30) Priorität: 13.09.2006 DE 102006042925
(43) Veröffentlichungstag der Anmeldung: 10.06.2009
(73) Patentinhaber: WABCO GmbH & Co. OHG, 30453 Hannover (DE)
(72) Erfinder: RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2007/006908
(87) Internationale Veröffentlichungsnummer: WO 2008/031479

(56) Entgegenhaltungen:
- EP-A- 1 075 989
- EP-A- 1 188 634
- US-A1- 2001 050 509
- US-A1- 2004 036 350

## Beschreibung

Die Erfindung betrifft eine Vorrichtung zum Schutz von Anhängerfahrzeugen vor unberechtigtem Entfernen.

Die einfachsten, bekannten Mechanismen zum Schutz von Anhängern vor Diebstahl sind Schlösser am King-Pin, welche es mechanisch unmöglich machen, den Anhänger anzukoppeln. Diese sind jedoch unkomfortabel, teuer und durch mechanische Einwirkung zu überwinden.

Es sind auch Fahrzeugbremsanlagen bekannt, welche einen Diebstahlschutz bereitstellen, in dem ein Ventil in einer Druckmittelleitung vorgesehen ist, welches zum Einlegen der Bremse den Druck in der druckmittelführenden Leitung abbaut. Bekannte Mechanismen verknüpfen die Funktion des Ventils z.B. mit der Betätigung eines Schlüssels, so dass sich die Parkbremse erst dann löst, wenn eine entsprechende Schlüsselbetätigung erfolgt ist. Hieran ist nachteilig, dass zur Freischaltung der Parkbremse der geeignete Schlüssel in den Händen derjenigen Person sein muss, welche den Anhänger entfernen möchte. Zudem bietet das herkömmliche System keinen flexiblen Schutz, der im Hinblick auf eine komplexe Logistik anpassbar ist.

Zur Verbesserung der Zuverlässigkeit der vorgenannten Diebstahlsicherung wird außerdem vorgeschlagen, die Verriegelung der Ventileinrichtung mittels einer in die Bremsanlage integrierten, kodierten Elektronikgruppe vorzunehmen, die zur Entriegelung der Ventileinrichtung neben der Versorgungsspannung einer zusätzlichen Freischaltung bedarf. Obwohl diese bekannten Diebstahlsicherungen bereits viele Vorteile und vor allem ein erhöhtes Maß an Sicherheit und Zuverlässigkeit aufweisen, kann es sich nachteilig auswirken, dass zum Lösen der Parkbremse kontinuierlich Strom an einer Ventileinrichtung anliegen muss. Wird die Ventileinrichtung bei den bekannten Schutzmechanismen von der Spannungsversorgung getrennt, fällt das Ventil unmittelbar In einen Zustand zurück, in dem die Parkbremsanlage wieder eingelegt ist. Insbesondere In Situationen, In denen ein Anhänger mit einer solchen Bremsanlage unbeabsichtigt vom Zugfahrzeug entkoppelt und so die Spannungsversorgung unterbrochen wird, kann dies Gefahren mit sich bringen. Die Bedienbarkeit dieser bekannten Schutzvorrichtungen beschränkt sich insoweit auf die von der integrierten Elektronikgruppe vorgegebenen Funktionen. Eine weitergehende Flexibilität und Anpassbarkelt der Schutzmechanismen Ist nicht bekannt.

Die US 2001/0050509 A1 betrifft eine Sicherungseinrichtung zur Immobilisierung von Anhängern, um eine unberechtigte Benutzung oder einen Diebstahl des Anhängers zu verhindern. Die Sicherungseinrichtung weist eine Kontrolleinheit, ein Kontrollventil und eine Stromversorgung auf, die in einem Gehäuse angeordnet sind. Eine Tastatur-Steuereinheit ist außerhalb des Gehäuses an dem Anhänger angeordnet. Über das Kontrollventil kann Druckluft über eine Auslassöffnung aus der Bremsanlage entlüftet werden, so dass das Anhängerfahrzeug beim unberechtigten Entfernen mittels der Bremsanlage eingebremst wird. Als Kontrollventil wird ein Pneumatikventil vorgeschlagen, das über einen Elektromohtor betätigbar ist.

Die US 2004/0063350 A1 betrifft ein diebstahlgeschütztes Bremssystem für Zugfahrzeuge, Anhänger und Motorfahrzeuge. Hierfür ist ein Ventil vorgesehen, das in einer Bremsleitung angeordnet wird und die Druckzufuhr im Bremszylinder absperren kann oder Luft in die Atmosphäre entlassen kann.

Die EP 1 188 634 A2 betrifft ein Anhängerbremsventil für ein Anhängefahrzeug mit elektronischer Bremsregelung und erweiterter Sicherheit des geparkten Anhängers. Die genannte erweiterte Sicherheit bezieht sich auf eine erhöhte Sicherheit gegen ein unbeabsichtigtes Anrollen des geparkten Anhängers aufgrund einer vergessenen Betätigung des roten Betätigungsknopfs des Parkventils.

Aus EP 1 075 989 A2 geht eine Fahrzeug-Diebstahlschutzvorrichtung hervor. Die dortige Diebstahlschutzvorrichtung weist ein bistabiles Ventil auf, in das eine Steuerschaltung, z.B. mit einem Mikroprozessor, integriert ist. Das Ventil weist zwei Schaltzustände auf, nämlich geöffnet und geschlossen. Im geöffneten Zustand ist eine Leitung, in der das Ventil angeordnet ist, geschlossen. Im anderen Schaltzustand ist die Leitung durchgängig.

Es ist eine Aufgabe der Erfindung, eine Vorrichtung für Anhängerfahrzeuge bereitzustellen, welche In verbesserter Weise vor dem unberechtigten Entfernen Im Allgemeinen schützt.

Die Aufgabe wird erfindungsgemäß von einer Vorrichtung der eingangs genannten Art gelöst, welche zum Schutz vor unberechtigtem Entfernen des Anhängerfahrzeuges eine Bremsanlage mit einem elektronischen Bremssystem (EBS) und eine Bedienvorrichtung aufweist. Die Bedienvorrichtung wird betätigt, um den Schutz zu aktivieren oder zu deaktivieren, oder für beide Vorgänge. Das elektronische Bremssystem wird entsprechend von der Bedienvorrichtung angesteuert, und der gewünschte Schutz wird mittels der Bremsanlage bewirkt, indem die Bremsanlage beim unberechtigten Entfernen dazu veranlasst wird, das Anhängerfahrzeug einzubremsen. Die erfindungsgemäße Vorrichtung ist somit derart vorteilhaft ausgestaltet, dass die Aktivierung und Desaktivierung mittels einer eigenständigen Bedienvorrichtung erfolgen kann. Diese Bedienvorrichtung Ist mit dem elektronischen Bremssystem gekoppelt, welches z.B, In einer kompakten Baugruppe untergebracht ist. Anstelle der herkömmlichen Signale zur Betätigung der Bremsen im Fahrbetrieb oder beim Parken werden nun von der Bedienvorrichtung zusätzliche Signale bereitgestellt. Die zusätzlichen Steuersignale veranlassen das elektronische Bremssystem, die Bremsen des Anhängerfahrzeuges in einer vordefinierten Weise zu betätigen, um das Anhängerfahrzeug vor unberechtigtem Entfernen zu schützen. Auf weitere Änderungen des Bremssystems oder gar eine eigene, in das Bremssystem integrierte elektronische Baugruppe kann gemäß diesem Aspekt der vorliegenden Erfindung im besten Fall ganz

verzichtet werden. Zumindest kann erfindungsgemäß eine bereits integrierte elektronische Baugruppe flexibler und vielfältiger eingesetzt werden. So wird gemäß der Erfindung vorgeschlagen, die bestehende Elektronik, z.B. das elektronische Bremssystem (EBS), zu den genannten Zwecken einzusetzen und entsprechend anzusteuern. Die weitere Elektronik und die Bedienelemente, welche zur zuverlässigen Aktivierung und zum Aufrechterhalten des Schutzes erforderlich sind, werden in einer gesonderten Baugruppe, welche hier als Bedienvorrichtung bezeichnet wird, bereitgestellt. Die Bedienvorrichtung kann in Form einer geschlossenen Box oder dergleichen am Anhängerfahrzeug angebracht sein. Die Bedienung erfolgt durch Betätigung von Bedienelementen an der Bedienvorrichtung, die vielfältig ausgestaltet sein können.

Gemäß einem vorteilhaften Aspekt der vorliegenden Erfindung ist die Vorrichtung ausgestaltet, um vor dem unbeabsichtigten Vertauschen von Anhängerfahrzeugen zu schützen. Beim Aufnehmen der Anhängerfahrzeuge durch die Zugmaschinen kann es zu Verwechslungen kommen. Bei herkömmlichen Anhängerfahrzeugen wird der Schutz beim Ankoppeln des Anhängerfahrzeuges deaktiviert. Oft wird dabei lediglich nach autorisierten und nicht autorisierten Personen unterschieden, wobei eine autorisierte Person z.B. auch mehrere bzw. ganze Gruppen von Anhängerfahrzeugen ankoppeln und diese entfernen könnte. Das kann zu Verwechslungen führen, so dass der falsche Anhänger mitgenommen wird. Insbesondere bei kurzfristigen Änderungen der Logistik kann es hier zu Fehlern kommen, die Zeit und Geld kosten. Gemäß einem vorteilhaften Aspekt der vorliegenden Erfindung wird deshalb vorgeschlagen, die Steuerung der erfindungsgemäßen Vorrichtung im Hinblick auf diese Problematik gesondert auszugestalten. Dazu wird eine Authentifizierung z.B. mittels eines Pincodes, einer Magnet- oder einer Chipkarte eingeführt, welche nicht nur den Fahrer identifiziert, sondern auch die richtigen Anhänger mit der entsprechenden Ladung, der einer bestimmten Fahrt eines Fahrers zugeordnet ist. Wird die Zuordnung nicht bestimmungsgemäß durchgeführt, bleiben die Bremsen (Park- oder Betriebsbremse) des Anhängerfahrzeuges eingelegt, so dass das Anhängerfahrzeug gar nicht, oder nur erschwert entfernt werden kann. Diese vorteilhafte Ausgestaltung erfordert demnach eine Berücksichtung der logistischen Abläufe über die einfache Autorisierung von Personen zum Entfernen von Anhängerfahrzeugen hinaus. Demnach werden Interne Kodierungen In der Bedienvorrichtung so erweitert, angepasst und verfeinert, dass bis hin zur einzelnen Fahrt eines Anhängerfahrzeuges jeder Vorgang durch die enfindungsgemäß eingerichtete Bremsanlage gewährt oder verhindert werden kann. Mit einem Schutzmechanismus, der ausschließlich auf einer bereits eingebauten Baugruppe der Bremsanlage beruht, ist dies nicht möglich. Die erfindungsgemäße, vorteilhaft erweiterte Anwendbarkeit wird jedoch von einer Bedienvorrichtung geboten, welche mit den vorhandenen Komponenten, wie vorstehend beschrieben, zusammenwirkt.

Gemäß einem weiteren vorteilhaften Aspekt der Erfindung weist die Bremsanlage des Anhängerfahrzeugs ein Steuerungselement auf, welches ausgestaltet ist, um mindestens zwei stabile Betriebszustände einzunehmen, In denen das Steuerelement jeweils nach dem Abschalten der Energiezufuhr verbleibt, wobel in einem ersten Zustand der Zylinder einer mit dem Steuerelement gekoppelten Federspeicherbremse arretiert wird. Das Steuerelement ist ein bistabiles Stromstoßventil, welches mittels elektromagnetischen Kräfte umgeschaltet wird. Im Unterschied zu den herkömmlichen Bremsanlagen weist eine erfindungsgemäße Bremsanlage demnach ein Steuerelement auf, welches mindestens zwei stabile Zustände einnehmen kann. Dadurch wird verhindert, dass durch äußere Einflüsse, wie z.B. die Unterbrechung der Versorgungsspannung, In einen anderen als den aktuell eingenommenen Zustand gewechselt wird. Der Wechsel von einem ersten Zustand, In dem z.B. die Parkbremse nicht eingelegt ist, In einen zweiten Zustand, In dem die Bremse eingelegt ist, wird durch diese Maßnahme in vorteilhafter Weise von den anderen Betriebs- oder Fehlfunktionen des Anhängerfahrzeuges unabhängig gemacht. Ein unbeabsichtigtes Einbremsen des Anhängerfahrzeuges während der Fahrt wird so verhindert.

Gemäß einem vorteilhaften Aspekt der vorliegenden Erfindung wird das Steuerelement mittels eines einmaligen Strom- oder Spannungspulses von dem ersten Zustand In den zweiten Zustand, und von dem zweiten Zustand In den ersten Zustand versetzt. Durch diesen vorteilhaften Aspekt der vorliegenden Erfindung wird sichergestellt, dass der Wechsel von einem ersten Zustand des Steuerelements - und damit der Parkbremsanlage - nicht etwa zufällig erfolgen kann, sondern nur dann, wenn die Spannungsversorgung eingeschaltet ist. Das wiederum ermöglicht es, das Einlegen und Lösen der Parkbremsanlage an eine Autorisierung und Authentifizierung zu knüpfen, die z.B. durch Eingabe eines Pincodes erfolgen kann. Auch die Betätigung eines Schlüssels ist vorstellbar, weist jedoch die vorgenannten Nachtelle auf. Die Vorteile des erfindungsgemäßen Steuerelementes bleiben Jedoch auch bei Verwendung eines Schlüssels erhalten. Der Zustand der Parkbremsanlage wird nur dann verändert, wenn dies wirklich gewünscht ist.

Ein weiterer vorteilhafter Aspekt der vorliegenden Erfindung wird erzielt, wenn beim unberechtigten Entfernen mit einer definierten Bremswirkung, die kleiner als die maximale Bremswirkung ist, eingebremst wird. Dadurch kann verhindert werden, dass das Anhängerfahrzeug zum völligen Stillstand kommt. Hieran wird zunächst deutlich, dass die Ansteuerung des elektronischen Bremssystems. mittels einer eigenständigen Bedienvorrichtung eine verbesserte Steuerbarkeit und damit neue Anwendungsmöglichkeiten bietet. Der Diebstahlschutz kann, muss aber nicht wie bei herkömmlichen Lösungen als elektronische oder mechanische Zusatzkomponente In der Bremsanlage vorgesehen sein. Statt dessen wird erfindungsgemäß mittels der gesonderten Bedienvorrichtung eine erweiterte und damit flexiblere Einwirkung auf den Schutz vor unberechtigtem Entfernen ermöglicht. Daher kann die Bremsanlage des Anhängerfahrzeuges z.B. dosiert eingeregelt werden: Daraus ergeben sich zahlreiche Vorteile. Zum einen wird verhindert, dass beim unbeabsichtigten Aktivieren des Schutzes. z.B. durch Fehlfunktionen oder Fehlbedlenung, der Anhänger derart blockiert wird, dass dies zu Gefahrensituationen, wie z.B. dem Ausbrechen des Anhängerfahrzeuges führt. Zum anderen kann das Anhängerfahrzeug selbst bei aktiviertem Schutz noch aus Gefahrensituationen entfernt werden. Wird das Anhängerfahrzeug mittels der elektronischen Steuerung der Bedienvorrichtung so eingebremst, dass es nicht schneller als eine bestimmte Geschwindigkeit fahren kann, dann kann es immer noch von Bahnübergängen oder aus anderen kritischen Situationen entfernt werden. Daraus ergibt sich insgesamt ein besserer Personenschutz auch für unbeteilligte Dritte.

Gemäß einem vorteilhaften Aspekt der Erfindung wird die dosierte Bremswirkung beim unberechtigten Entfernen des Anhängerfahrzeuges so gesteuert, dass das Anhängerfahrzeug auf eine bestimmte Geschwindigkeit eingebremst wird. Diese Bremswirkung kann in vorteilhafter Weise von der Betriebsbremse des Anhängerfahrzeuges ausgeführt werden. Grundsätzlich können die Feststellbremse, die als Parkbremse genutzt wird und in der Regel durch eine Federkraft bewirkt wird, und die Betriebsbremse, deren Bremskräfte pneumatisch bewirkt werden, zum Schutz vor unberechtigtem Entfernen des Anhängerfahrzeuges dienen. Gemäß diesem Aspekt der vorliegenden Erfindung wird vorteilhaft die Betriebsbremse zum Schutz vor unberechtigtem Entfernen des Anhängerfahrzeuges eingesetzt, da deren Ansteuerung insbesondere für ein dosiertes Einbremsen eingerichtet ist. Im Zusammenhang mit dem vorstehenden Aspekt des Schutzes vor unbeabsichtigtem Vertauschen der Anhängerfahrzeuge ist dies ein großer Vorteil, da das Risiko für Fahrer und Fahrzeug vermindert wird. Gemäß einer vorteilhaften Ausgestaltung kann ein Signalgeber an einen GIO-Ausgang (Generic Input Output) angeschlossen werden, der bei Überschreitung der zulässigen Geschwindigkeit aktiviert wird. Vorteilhafte Werte der maximalen Geschwindigkeit können zum Beispiel bei 10 km/h, also bei Schrittgeschwindigkeit, liegen.

Gemäß weiterer vorteilhafter Ausgestaltungen wird der Schutz vor unberechtigtem Entfernen durch Eingabe eines codierten Zahlenwertes (PIN) oder einer Magnetkarte oder Chipkarte, oder auch durch eine Kombination der verschiedenen Möglichkeiten, und gegebenenfalls auch durch Eingabe eines weiteren codierten Zahlenwertes deaktiviert. Auf diese Weise können die Vorgänge zum Aktivieren und Deaktivieren des Schutzes unterschiedlich ausgestaltet sein. Somit kann vorgesehen sein, dass der Fahrer, der das Anhängerfahrzeug entfernen will, hierfür z.B. eine Chipkarte mit einem bestimmten Code benötigt, welche beide an der Bedienvorrichtung in geeigneter Weise für die Authentifizierung eingesetzt werden. Zum Einschalten des Schutzes am Bestimmungsort kann dann z.B. ein einfacher allgemeiner Mechanismus, wie das Drücken eines Knopfes an der Bedienvorrichtung, vorgesehen sein. Damit kann der Schutz von jeder Person, auch ohne Kenntnisse eines speziellen Codes aktiviert werden. Insbesondere kann erfindungsgemäß vorgesehen sein, dass sich der Schutz automatisch aktiviert, wenn die Zündung des Zugfahrzeuges ausgeschaltet wird. Andere Varianten dieses Aspektes der Erfindung können eine Super-PIN zum Entsperren des Fahrzeuges vorsehen, wenn der PIN eines Fahrers verloren geht. Der Super-PIN kann vorteilhaft bei Inbetriebnahme des Fahrzeuges am Ende der Tests beim Hersteller in das End of Line (EOL) Protokoll geschrieben werden. Der Super-PIN kann dann z.B. beim Fahrzeughersteller abgefragt werden und beispielsweise mit der Fahrgestellnummer des Fahrzeuges verknüpft sein.

Es wird dabei ebenfalls vorteilhaft berücksichtigt, dass die Aktivierung und Deaktivierung des Schutzes vor unberechtigtem Entfernen außen am Anhängerfahrzeug durchgeführt werden kann. Dies ist dann möglich, wenn die Bedienvorrichtung entsprechend leicht erreichbar angeordnet ist.

Gemäß einer weiteren vorteilhaften Ausgestaltung der vorliegenden Erfindung wird der Schutz vor unberechtigtem Entfernen des Anhängerfahrzeuges an der Bedienvorrichtung automatisch oder manuell aktiviert und durch ein Funksignal, wie z.B. eine SMS (Short Message Service), wieder deaktiviert. Dabei bezeichnet der Begriff "SMS" die von den Mobilfunkanbietern bereitgestellte Möglichkeit, Textnachrichten zu übertragen. Grundsätzlich sind hiervon auch Abwandlungen im Rahmen der vorliegenden Erfindung einsetzbar, solange diese die Übertragung eines definierten Funksignals ermöglichen. Gemäß einer weiteren vorteilhaften Ausgestaltung kann der Schutz vor unberechtigtem Entfernen an der Bedienvorrichtung auch durch ein Funksignal, wie z.B. eine SMS aktiviert und deaktiviert werden. Hierdurch ergibt sich eine noch weitreichendere Flexibilität beim Einsatz der Anhängerfahrzeuge und insbesondere eine größere Unabhängigkeit davon, ob die jeweilige Person, die den Anhänger entfernen möchte, über die richtigen Mittel, wie Schlüssel o. Ä., verfügt. Eine entsprechende SMS zum Aktivieren und Deaktivieren kann somit auch aus großer Entfernung zur Freischaltung des Anhängerfahrzeuges eingesetzt werden. Dies schafft völlig neuartige logistische Möglichkeiten für den Einsatz von Anhängerfahrzeugen. Die Unterscheidung in ein automatisches oder manuelles Aktivieren und ein Deaktivieren per Funksignal, wie z.B. eine SMS, hat den folgenden Vorteil: Jeder beliebige Fahrer kann beim Verlassen des Fahrzeuges die Schutzvorrichtung "scharf' stellen. Danach wird für das erneute Entfernen des Anhängerfahrzeuges wieder die Kontrolle, z.B. durch eine Zentrale garantiert.

Gemäß einer weiteren vorteilhaften Ausgestaltung kann der Schutz vor unberechtigtem Entfernen, insbesondere als Diebstahlschutz, über eine CAN-Datenleitung von dem Zugfahrzeug auf das Anhängerfahrzeug übermittelt werden. Dies wird der Anforderung gerecht, dass die Kontrolle über das Anhängerfahrzeug vom Zugfahrzeug aus durchgeführt wird.

Die Erfindung wird nachfolgend anhand von Ausführungsbeispielen unter Bezugnahme auf die beigefügten Figuren beispielhaft erläutert. Es zeigten:
- Fig. 1 (a): eine vereinfachte schematische Darstellung einer Bremsanlage gemäß dem Stand der Technik,
- Fig. 1 (b): eine vereinfachte schematische Darstellung einer Vorrichtung gemäß einem vorteilhaften Aspekt der Erfindung, und
- Fig. 2: eine vereinfachte schematische Darstellung einer Bremsanlage gemäß einem vorteilhaften Aspekt der Erfindung.

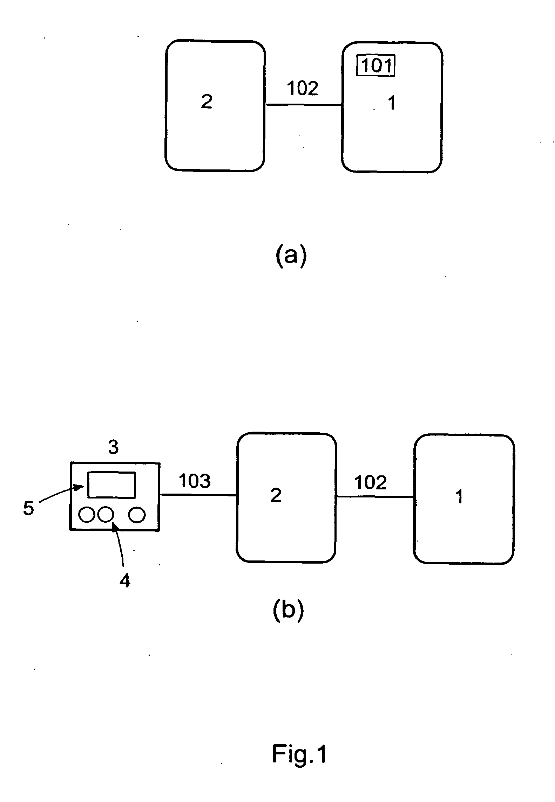

Fig. 1(a) zeigt die Anordnung gemäß dem Stand der Technik. Demnach ist z.B. ein elektronisches Bremssystem EBS 2 mit der Bremsanlage 1 gekoppelt. Innerhalb der Bremsanlage 1 befindet sich eine eigenständige elektronische Baugruppe 101, welche zur Bereitstellung eines Schutzmechanismus vorgesehen ist. Die Bremsanlage 1 ist mit dem EBS über Leitungen 102 gekoppelt, welche die Steuerungen der Bremsanlage vornehmen.

Fig. 1(b) zeigt ein vereinfachtes Blockdiagramm einer erfindungsgemäßen Vorrichtung. Die Bedienvorrichtung 3 ist mit einem elektronischen Bremssystem 2 (EBS) gekoppelt. Bei einem elektronisch geregelten Bremssystem gibt der Fahrer auf elektrischem Wege die Bremsbefehle, welche innerhalb einer elektronischen Baugruppe in Steuersignale zur Steuerung eines mit einem Druckmittel (Luft, Hydraulik) gesteuerten Bremssystems übersetzt. Es ist ebenfalls üblich, dass sich ein Teil der anzusteuernden Ventile in räumlicher Nähe der elektronischen Baugruppe befindet. Das elektronisch geregelte Bremssystem kann Funktionen wie eine automatische, lastabhängige Bremse oder ein Antiblockiersystem beinhalten. Das elektronische Bremssystem 2 wirkt mittels Steuersignalen 103 auf die Bremsanlage 1 und diese mittels weiterer Signale oder mittels einer Leitung 102, welche ein Druckmittel führen, auf die Bremsanlage 1. Anhand der Fig. 1 wird deutlich, dass die Steuerung gemäß diesem Aspekt der vorliegenden Erfindung mittels der Bedienvorrichtung 3 erfolgt, welche das elektronische Bremssystem 2 in einer Weise ansteuert, welche zur Betätigung der Bremsanlage 1 führt, wie sie im Grunde auch im Normalbetrieb erfolgen kann. Die Bedienvorrichtung 3 weist Bedienelemente 4, wie Knöpfe, Tasten oder dergleichen auf, mit denen die Funktionen ausgeführt werden können. Zudem ist eine Anzeige 5 auf der Bedienvorrichtung 3 vorgesehen, welche eine menügesteuerte Bedienung ermöglicht. Die Bedienvorrichtung kann ausgestaltet sein, um einen PIN-Code entgegenzunehmen, welcher den Schutz aktivierte oder deaktiviert. An der Bedienvorrichtung kann auch eine Lesevorrichtung für Magnet- oder Chipkarten vorgesehen sein, so dass mittels einer Karte oder der Kombination aus einer Karte und einem PIN-Code die Aktivierung oder die Deaktivierung des Schutzes erfolgt. Besonders vorteilhaft ist es, wenn die Codierung so ausgeführt ist, dass durch sie nicht nur der Fahrer oder das Fahrzeug zugeordnet werden, sondern eine spezifische Fahrt mit einer bestimmten Ladung für einen Fahrer. Auf diese Weise lässt sich der Schutz vorteilhaft zur logistischen Planung und Kontrolle der Fracht einsetzen. Fehler werden dadurch vermieden.

Die Bedienvorrichtung 3 oder das EBS 2 können ebenfalls eine Einheit enthalten, mit der ein Empfang von Funksignalen zum Aktivieren und Deaktivieren des Schutzes vor unberechtigtem Entfernen durchgeführt werden kann. In einer vorteilhaften Ausgestaltung kann das EBS 2 oder die Bedienvorrichtung 3 insbesondere SMS empfangen und auswerten, und diese zur Aktivierung und Deaktivierung des Schutzes einsetzen. Ebenso ist eine Aktivierung und Deaktivierung des Schutzes mittels eines CAN-Busses eines Zugfahrzeuges, welches an das Anhängerfahrzeug gekoppelt ist, vorstellbar.

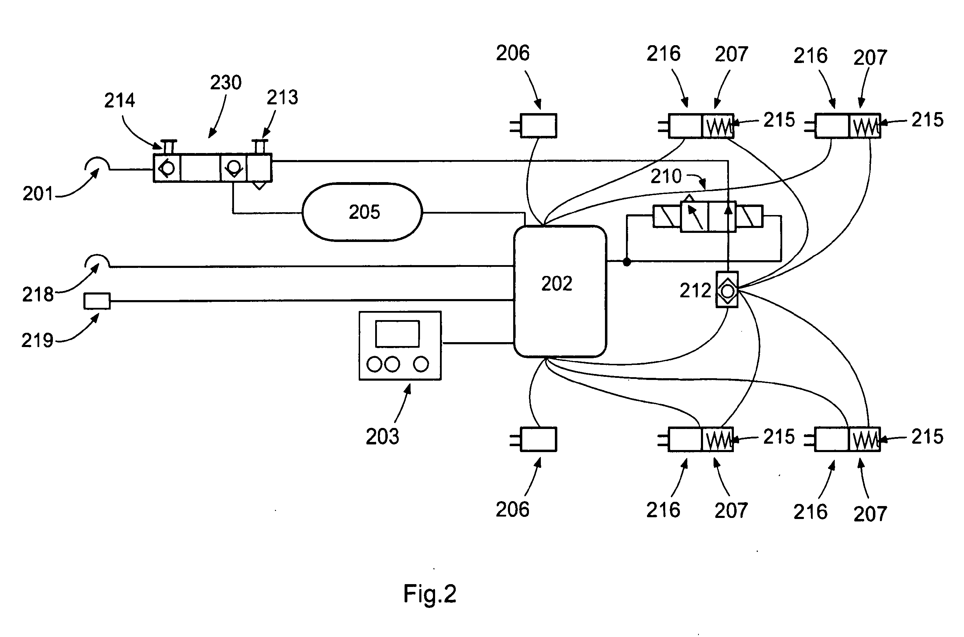

Fig. 2 zeigt eine schematische Darstellung einer Bremsanlage, welche Aspekte der vorliegenden Erfindung verwirklicht. Gemäß diesem Ausführungsbeispiel kann ein Anhängerfahrzeug, welches mit der erfindungsgemäßen Vorrichtung ausgestattet ist, über einen Kupplungskopf für Vorratsdruck 201 mit dem Zugfahrzeug gekoppelt sein. Über ein Anhängerbremsventil 230 wird der Steuerdruck zum elektronischen Bremssystem (EBS) 202 geleitet. Das Anhängerbremsventil 230 verfügt über einen ersten Betätigungsknopf 213 zur manuellen Betätigung der Parkbremsanlage. Ein zweiter Betätigungsknopf 214 ist zum Lösen der automatischen Bremse bei abgekoppeltem Anhängerfahrzeug vorgesehen. Der Vorratsdruck für den Vorratsdruckbehälter 205 fließt über ein im Anhängerbremsventil integriertes Rückschlagventil zum Vorratsdruckbehälter 205. Über die pneumatische Steuerleitung 218 kann das Fahrzeug pneumatisch, und über die elektrische Bremsleitung 219 kann das Anhängerfahrzeug elektrisch angesteuert werden. Vom EBS 202 werden die Komponenten 206 der Betriebsbremse und die entsprechenden Komponenten 216 für die Betriebsbremse in den Kombibremszylindern 207 angesteuert. Um die Radbremsen vor einer Zerstörung durch eine Überbeanspruchung in Folge einer Kraftaddition der Kombibremszylinder zu schützen, ist in der Bremsanlage ein Überlastschutzventil 212 vorhanden, das in diesem Beispiel aus einem 3/2-Wegeventil besteht. Von diesem Ventil wird der Druck zu den Kombibremszylindern verteilt. Die Parkbremse wird durch Betätigung des Betätigungsknopfes 213 eingelegt. Dadurch wird der Parkbremsteil des Kombizylinders entlüftet, so dass die integrierte Feder die Radbremse betätigen kann. Wird bei betätigter Parkbremse zusätzlich die Betriebsbremse betätigt, fließt der Bremsdruck über das Überlastschutzventil 212 in den Parkbremsteil der Kombizylinder 207 und baut so proportional zur aufgebauten Bremskraft im Betriebsbremsteil die Kraft im Parkbremsteil ab, so dass keine Kraftaddition stattfindet.

Erfindungsgemäß ist ein bistabiles Stromstoßventil 210 vorgesehen, welches zwischen dem Parkbremsventil des Anhängerventils 230 und dem Federspeicherbremszylinder 215 des Kombibremszylinders 207 angeordnet ist. Das bistabile Stromstoßventil 210 kann erfindungsgemäß zwei Stellungen (Zustände) einnehmen, zwischen denen mittels zweier Elektromagnete hin- und hergewechselt wird. Wenn sich das bistabile Stromstoßventil 210 in einem der beiden stabilen Zustände befindet, wird dieser Zustand auch dann beibehalten, wenn das bistabile Stromstoßventil 210 von der Energieversorgung getrennt ist. Gemäß diesem Aspekt der Erfindung ist demnach vorteilhaft vorgesehen, dass zur Umschaltung von einem ersten stabilen Zustand in einen zweiten stabilen Zustand des bistabilen Stromstoßventils 210 lediglich ein kurzer Stromstoß oder Stromimpuls erforderlich ist. Eine kontinuierliche Versorgung mit Strom ist natürlich nicht nachteilig, aber auch nicht mehr zwingend erforderlich, um zwischen den beiden Zuständen zu wechseln, oder einen der beiden Zustände beizubehalten. In einem ersten Zustand des bistabilen Stromstoßventils 210 wird das Anhängerbremsventil 230 mit dem Überlastschutzventil 212 mit Druckluft versorgt. Wird die Verbindungsleitung aus dem Vorratsspeicher 205 mit Druckluft beaufschlagt, wird auf diese Weise gegen den Federdruck des Parkbremsteils des Kombibremszylinders 207 die Parkbremse gelöst. Wenn durch einen Stromstoß das bistabile Stromstoßventil 210 in den zweiten stabilen Zustand versetzt wird, wird die Verbindungsleitung zum Überlastschutzventil 212 entlüftet. Hierdurch werden die Parkbremsteile 215 der Kombizylinder 207, welche an das Überlastschutzventil 212 gekoppelt sind, ebenfalls entlüftet, und die Parkbremsanlage wird eingelegt.

Gemäß einer vorteilhaften Ausgestaltung kann das Stromstoßventil 210 ebenfalls mit nur einem Magneten ausgestattet sein, welcher das Ventil von einem stabilen Zustand in den anderen und wieder zurück versetzt. Es kommen noch andere mögliche Ausgestaltungen für eine Vorrichtung gemäß diesem Aspekt der Erfindung in Betracht, soweit diese mindestens zwei stabile, im Wesentlichen energieunabhängige Zustände aufweisen. Andererseits kann zur Aufrechterhaltung eines Zustandes auch eine minimale Energiequelle, wie ein Pufferbatterie oder dergleichen vorgesehen sein, soweit diese das Anhängerfahrzeug von der Spannungsversorgung des Zugfahrzeuges unabhängig macht.

In einer vorteilhaften Ausgestaltung wird die Betriebsbremse 206 oder die Betriebsbremsteile 216 der Kombibremszylinder 207 zum Schutz des Anhängerfahrzeuges eingesetzt. Dabei werden diese durch das EBS 202 angesteuert. Das Einbremsen wird von der Bedienvorrichtung aktiviert. In einer vorteilhaften Ausgestaltung wird die Bremse entsprechend einem spezifischen Bremsdruck von zum Beispiel 3,0 bar auf eine definierte, maximale Geschwindigkeit eingebremst, wenn der Schutz aktiviert wurde und das Fahrzeug unberechtigt entfernt wird. Dadurch lässt sich das Anhängerfahrzeug nur mit Schrittgeschwindigkeit von z.B. 10 km/h entfernen. Der Vorteil besteht darin, dass das Anhängerfahrzeug noch eine geringe Manövrierfähigkeit aufweist und z.B. aus Gefahrensituationen entfernt werden kann. Gemäß einer weiteren Ausgestaltung wird beim Überschreiten einer maximalen Geschwindigkeit ein elektrisches Signal ausgegeben, welches einen Signalgeber, wie z.B. die Hupe oder dergleichen, aktiviert.

Entsprechend Fig. 1 ist auch in Fig. 2 eine Bedienvorrichtung 203 vorgesehen, welche mit dem EBS 202 gekoppelt ist. Die Bedienvorrichtung 203 wird erfindungsgemäß dazu eingesetzt, den Schutz vor unberechtigtem Entfernen zu aktivieren oder zu deaktivieren. Hierzu weist die Bedienvorrichtung 203 die zuvor unter Bezugnahme auf Fig. 1 beschriebenen Bedienelemente, wie Tasten, Anzeigen etc., auf. Weitere vorteilhafte Ausgestaltungen ermöglichen es, den erfindungsgemäßen Schutz z.B. durch ein Funksignal, wie beispielsweise eine SMS o. Ä., über die Bedienvorrichtung zu aktivieren oder zu deaktivieren. In einer vorteilhaften Ausgestaltung kann die Aktivierung lediglich durch einen Tastendruck o. Ä. in einfacher Form manuell erfolgen, wohingegen die Deaktivierung nur per SMS durch eine autorisierte Zentrale erfolgen kann.

## Patentansprüche

1. Vorrichtung zum Schutz vor unberechtigtem Entfernen eines Anhängerfahrzeuges mit einem elektronischen Bremssystem (EBS) (202) und einer Bremsanlage, mit einer Bedienvorrichtung (203), welche eingerichtet ist, um zum Aktivieren und Deaktivieren des Schutzes betätigt zu werden, so dass das elektronische Bremssystem (202) angesteuert wird, den Schutz mittels der Bremsanlage zu bewirken, und so das Anhängerfahrzeug beim unberechtigten Entfernen mittels der Bremsanlage einzubremsen, wobei die Bremsanlage ein bistabiles, elektromagnetisch umschaltbares Stromstossventil (210) aufweist, welches ausgestaltet ist, um zwei stabile Betriebszustände einzunehmen, in denen das Stromstossventil (210) jeweils nach dem Abschalten der Energiezufuhr verbleibt, wobei in einem ersten Betriebszustand eine Federspeicherbremse (215) entlüftet ist.

2. Vorrichtung nach Anspruch 1, **dadurch gekennzeichnet, dass** das Steuerelement (210) eingerichtet ist, um mittels eines einmaligen Strom oder Spannungspulses von dem ersten Zustand in einen zweiten Zustand versetzt zu werden..

3. Vorrichtung nach Anspruch 1 oder 2, **dadurch gekennzeichnet, dass** das Anhängerfahrzeug bei aktiviertem Schutz mit einer dosierten Bremswirkung, die kleiner als die maximale Bremswirkung ist, eingebremst wird, so dass das Anhängerfahrzeug nicht zum völligen Stillstand kommt.

4. Vorrichtung nach Anspruch 3, **dadurch gekennzeichnet, dass** die Bremswirkung so gesteuert wird, dass das Anhängerfahrzeug eine definierte Geschwindigkeit nicht überschreiten kann.

5. Vorrichtung nach Anspruch 3 oder 4, **dadurch gekennzeichnet, dass** die dosierte Bremswirkung von der Betriebsbremse (206, 216) erzielt wird.

6. Vorrichtung nach einem der vorstehenden Ansprüche, **dadurch gekennzeichnet, dass** beim Überschreiten einer vorgegebenen Geschwindigkeit ein Signal an einem vordefinierten Signalausgang des Anhängerfahrzeuges anliegt.

7. Vorrichtung nach einem der vorstehenden Ansprüche, **dadurch gekennzeichnet, dass** der Schutz vor unberechtigtem Entfernen an der Bedienvorrichtung (203) durch Eingabe eines codierten Zahlenwertes (PIN) und/oder einer Magnetkarte und/oder einer Chipkarte aktiviert wird, und durch Eingabe eines weiteren codierten Zahlenwertes deaktiviert wird.

8. Vorrichtung nach einem der vorstehenden Ansprüche, **dadurch gekennzeichnet, dass** die Aktivierung und Deaktivierung des Schutzes vor unberechtigtem Entfernen aussen am Anhängerfahrzeug aktivierbar und deaktivierbar ist.

9. Vorrichtung nach einem der vorstehenden Ansprüche, **dadurch gekennzeichnet, dass** der Schutz vor unberechtigtem Entfernen an der Bedienvorrichtung (203) automatisch oder manuell aktiviert wird und durch ein Funksignal, insbesondere eine SMS, deaktiviert wird.

10. Vorrichtung nach einem der vorstehenden Ansprüche, **dadurch gekennzeichnet, dass** der Schutz vor unberechtigtem Entfernen an der Bedienvorrichtung (203) durch ein Funksignal, insbesondere eine SMS, aktiviert und deaktiviert wird.

11. Vorrichtung nach einem der vorstehenden Ansprüche, **dadurch gekennzeichnet, dass** der Schutz vor unberechtigtem Entfernen über eine CAN-Schnittstelle vom Zugfahrzeug übertragen wird.

## Claims

1. Device for protecting against unauthorized removal of a trailer vehicle with an electronic brake system (EBS)(202) and a brake device, having an operator control device (203) which is configured to be actuated in order to activate and deactivate the protection, with the result that the electronic brake system (202) is actuated in order to bring about the protection by means of the brake device, and to therefore brake the trailer vehicle by means of the brake device when unauthorized removal has occurred, wherein the brake device has a bistable, electromagnetically switchable current surge valve (210) which is configured to assume two stable operating states in which the current surge valve (210) respectively remains after the energy supply is switched off, wherein in a first operating state a spring store brake (215) is vented.

2. Device according to Claim 1, **characterized in that** the control element (210) is configured to be adjusted from the first state to a second state by means of a single current of voltage pulse.

3. Device according to Claim 1 or 2, **characterized in that** when the protection is activated the trailer vehicle is braked with a metered braking effect which is smaller than the maximum braking effect, with the result that the trailer vehicle does not come to a complete standstill.

4. Device according to Claim 3, **characterized in that** the braking effect is controlled in such a way that the trailer vehicle cannot exceed a defined speed.

5. Device according to Claim 3 or 4, **characterized in that** the metered braking effect is achieved by the service brake (206, 216).

6. Device according to one of the preceding claims, **characterized in that,** when a predefined speed is exceeded, a signal is applied to a predefined signal output of the trailer vehicle.

7. Device according to one of the preceding claims, **characterized in that** the protection against unauthorized removal on the operator control device (203) is activated by inputting a coded numerical value (PIN) and/or a magnetic card and/or a chip card and is deactivated by inputting a further coded numerical value.

8. Device according to one of the preceding claims, **characterized in that** the activation and deactivation of the protection against unauthorized removal on the outside of the trailer vehicle can be activated and deactivated.

9. Device according to one of the preceding claims, **characterized in that** the protection against unauthorized removal on the operator control device (203) is activated automatically or manually and is deactivated by means of a radio signal, in particular an SMS.

10. Device according to one of the preceding claims, **characterized in that** the protection against unauthorized removal on the operator control device (203) is activated and deactivated by means of a radio signal, in particular an SMS.

11. Device according to one of the preceding claims, **characterized in that** the protection against unauthorized removal is transmitted from the towing vehicle via a CAN interface.

## Revendications

1. Dispositif de protection contre l'enlèvement non autorisé d'un véhicule remorque comprenant un système de freinage électronique (EBS) (202) et un équipement de freinage, avec un dispositif de commande (203), lequel est arrangé pour être actionné en vue d'activer et de désactiver la protection, de telle sorte que le système de freinage électronique (202) est commandé pour appliquer la protection au moyen de l'équipement de freinage et pour freiner ainsi le véhicule remorque au moyen de l'équipement de freinage en cas d'enlèvement non autorisé, l'équipement de freinage présentant une vanne à impulsion de courant (210) bistable à permutation électromagnétique qui est configurée pour adopter deux états opérationnels stables dans lesquels la vanne à impulsion de courant (210) reste à chaque fois après avoir déconnecté l'arrivée d'énergie, un frein à accumulation (215) étant purgé dans un premier état opérationnel.

2. Dispositif selon la revendication 1, **caractérisé en ce que** l'élément de commande (210) est arrangé pour être déplacé du premier état dans le deuxième état au moyen d'une impulsion de courant ou de tension unique.

3. Dispositif selon la revendication 1 ou 2, **caractérisé en ce que** le véhicule remorque, lorsque la protection est activée, est freiné avec un effet de freinage dosé qui est inférieur à l'effet de freinage maximum, de sorte que le véhicule remorque ne parvient pas à un arrêt complet.

4. Dispositif selon la revendication 3, **caractérisé en ce que** l'effet de freinage est commandé de telle sorte que le véhicule remorque ne peut pas dépasser une vitesse définie.

5. Dispositif selon la revendication 3 ou 4, **caractérisé en ce que** l'effet de freinage dosé est obtenu par le frein de service (206, 216).

6. Dispositif selon l'une des revendications précédentes, **caractérisé en ce qu'**en cas de dépassement d'une vitesse prédéfinie, un signal est appliqué à une sortie de signal prédéfinie du véhicule remorque.

7. Dispositif selon l'une des revendications précédentes, **caractérisé en ce que** la protection contre un enlèvement non autorisé est activée sur le dispositif de commande (203) en saisissant une valeur numérique codée (PIN) et/ou en introduisant une carte magnétique et/ou une carte à puce et elle est désactivée en saisissant une autre valeur numérique codée.

8. Dispositif selon l'une des revendications précédentes, **caractérisé en ce que** l'activation et la désactivation de la protection contre un enlèvement non autorisé peut être activée et désactivée à l'extérieur sur le véhicule remorque.

9. Dispositif selon l'une des revendications précédentes, **caractérisé en ce que** la protection contre un enlèvement non autorisé est activée automatiquement ou manuellement sur le dispositif de commande (203) et désactivée par un signal radioélectrique, notamment un SMS.

10. Dispositif selon l'une des revendications précédentes, **caractérisé en ce que** la protection contre un enlèvement non autorisé est activée et désactivée sur le dispositif de commande (203) par un signal radioélectrique, notamment un SMS.

11. Dispositif selon l'une des revendications précédentes, **caractérisé en ce que** la protection contre un enlèvement non autorisé est transmise depuis le véhicule tracteur par le biais d'un bus CAN.
